# EUROPÄISCHE PATENTSCHRIFT

(11) **EP 3 199 855 B1**
(45) Veröffentlichungstag und Bekanntmachung des Hinweises auf die Patenterteilung: **06.06.2018**
(21) Anmeldenummer: 17153259.1
(22) Anmeldetag: 26.01.2017
(51) Int. Cl.: F16L 33/22, F16L 37/091

(54) **KUPPLUNGSKÖRPER ZUM LÖSBAREN STECKANSCHLUSS EINER ROHRLEITUNG**
COUPLING BODY FOR REVERSIBLY CONNECTING A PIPELINE
CORPS D'ACCOUPLEMENT POUR UN RACCORD ENFICHABLE AMOVIBLE D'UNE CONDUITE

(30) Priorität: 28.01.2016 DE 102016101534
(43) Veröffentlichungstag der Anmeldung: 02.08.2017
(73) Patentinhaber: Voss Automotive GmbH, 51688 Wipperfürth (DE)
(72) Erfinder: HAGEN, Harald, 51688 Wipperfürth (DE); WASCHKEWITZ, Markus, 51702 Bergneustadt (DE); FRANGENBERG, Markus, 51789 Lindlar (DE)
(74) Vertreter: Patent- und Rechtsanwälte Dr. Solf & Zapf

(56) Entgegenhaltungen:
- WO-A1-95/24581
- DE-U1- 8 908 670
- DE-U1- 29 915 762

## Beschreibung

Die vorliegende Erfindung betrifft einen Kupplungskörper gemäß dem Oberbegriff des Anspruchs 1.

Bei diesem bekannten Kupplungskörper werden das Halteelement und die Umfangsdichtung von einer Seite in die Durchgangsöffnung eingesetzt. Anschließend wird die Durchgangsöffnung endseitig mit einem Verschlusselement, das eine Einstecköffnung für die Rohrleitung besitzt, mit der Überwurfschraube durch Verpressen, Verrasten oder Umbördeln unlösbar verbunden, das heißt, das Verschlusselement kann nicht zerstörungsfrei entfernt werden. Hierbei besteht der Nachteil, dass die Rohrleitung mit der Umfangsdichtung und dem Haltering nicht gänzlich vom Kupplungskörper demontiert werden kann und eine Wiederverwendung der Rohrleitung nicht möglich ist.

Der Erfindung liegt die Aufgabe zu Grunde, diesen vorstehenden Nachteil bei einem Kupplungskörper der eingangs genannten Art zu vermeiden.

Erfindungsgemäß wird dies durch die Merkmale des kennzeichnenden Teils des Anspruchs 1 erreicht. Durch diese Ausgestaltung kann nach Demontage des Kupplungskörpers aus einem Anschlussstück mit einer Gewindebohrung zum Einschrauben des Kupplungskörpers, durch Aufbringen eines gegenläufigen Drehmomentes auf die beiden Teilabschnitte des Bestätigungsabschnitts eine Trennung innerhalb der Sollbruchstelle bewirkt werden. Danach ist eine Entfernung des in Einschraubrichtung vorderen Teilabschnitts des Kupplungskörpers möglich, so dass das auf der Rohrleitung befindliche Halteelement, insbesondere eine Zahnscheibe oder ein Zahnring, frei zugänglich ist. Der frei zugängliche Zahnring oder die Zahnscheibe kann dann zum Beispiel mit einer Schneidzange aufgeschnitten und entfernt werden. Danach kann die Rohrleitung aus dem anderen Teilabschnitt des Kupplungskörpers herausgezogen werden und ist wiederverwendbar.

Weitere vorteilhafte Ausführungen der Erfindung sind in den einzelnen Unteransprüchen enthalten.

Bei dem Kupplungsteil nach der Erfindung graben sich die Zähne des Halterings am Umfang der eingesteckten Rohrleitung im Belastungsfall ein, so dass eine Einbuchtung bzw. Einschnürung in der Rohrleitung erfolgt, und zwar im Sinne einer Durchmesserverringerung. Dabei besitzt diese Einschnürung eine gewisse axiale Erstreckung. Durch die Verwendung des erfindungsgemäßen Distanzelementes wird diese von dem Haltering erzeugte Einschnürung überbrückt, und die Umfangsdichtung verläuft im eingesteckten Zustand des Rohres außerhalb der Einschnürung in einem Bereich der eingesteckten Rohrleitung, der eine unverformte Rohroberfläche aufweist. Hierdurch wird eine sichere und dauerhafte Abdichtung des Dichtspaltes zwischen der eingesteckten Rohrleitung und der Umfangsdichtung gewährleistet.

In einer weiteren erfindungsgemäßen Ausführungsform bildet die in Einschraubrichtung hintere Stirnfläche des Distanzelementes gleichzeitig die in Einschraubrichtung vordere Nutwand der die Umfangsdichtung aufnehmenden Umfangsnut, so dass sich der Distanzring im unmittelbaren Berührungskontakt mit der Umfangsdichtung befindet, d. h. die Umfangsdichtung stützt sich am Distanzring ab. Hierdurch werden die im Belastungsfall auftretenden Druckkräfte, die über den Zahnring auf das Distanzelement übertragen werden, unmittelbar in die Umfangsdichtung eingeleitet, was zu einer erhöhten Verpressung der Umfangsdichtung führt. Durch diese erhöhte Verpressung der Umfangsdichtung in der Umfangsnut wird eine Permeation des in der Rohrleitung befindlichen gasförmigen Mediums durch die Umfangsdichtung wesentlich verringert, was zu einer verbesserten Abdichtung führt.

Eine weitere Ausführungsform der Erfindung besteht darin, dass sich das Distanzelement insbesondere mit seiner in Einschraubrichtung hinteren Stirnfläche an einem Anschlag der Überwurfschraube insbesondere an seiner in Einschraubrichtung hinteren Stirnfläche abstützt und mit seiner Stirnfläche auch die in Einschraubrichtung vordere Nutwand bildet. Hierdurch wird eine zusätzliche Verpressung durch die auf die Distanzhülse einwirkenden Druckkräfte der Umfangsdichtung verhindert. Vielmehr werden die auftretenden Druckkräfte unmittelbar in die Überwurfschraube eingeleitet.

Gemäß der Erfindung ist in das in Einschraubrichtung hintere Ende der Überwurfschraube ein Verschlusselement eingesetzt, das seinerseits eine Einstecköffnung für die einzusteckende Rohrleitung aufweist. Hierbei befindet sich zweckmäßigerweise im Innern der Einstecköffnung eine Umfangsdichtung zum Abdichten des Umfangsspaltes zwischen der eingesteckten Rohrleitung und dem Verschlusselement. Diese innere Dichtung dient im Wesentlichen zur Schmutzabdichtung. Das Verschlusselement ist durch Umbördelung, Verrasten oder Verpressen mit der Überwurfschraube unlösbar, das heißt nur durch Zerstören lösbar, verbunden.

Weiterhin kann es erfindungsgemäß von Vorteil sein, wenn in der Durchgangsöffnung der Überwurfschraube in deren in Einschraubrichtung vorderen Endabschnitt eine Einsteckbegrenzung als Anschlag für die eingesteckte Rohrleitung ausgebildet ist. Diese Einsteckbegrenzung gewährleistet zusätzlich, dass der Kupplungskörper in seinem aus einem Anschlussstück herausgeschraubten Zustand nicht auf der Rohrleitung verschiebbar ist.

Anhand der in den nachfolgenden Figuren dargestellten Ausführungsbeispiele wird die Erfindung näher erläutert. Es zeigen:
- Fig. 1: einen erfindungsgemäßen Kupplungskörper in einer Figurenhälfte in Ansicht, in der anderen Figurenhälfte im Längsschnitt,
- Fig. 2: einen Kupplungskörper gemäß Figur 1, mit eingesteckter Rohrleitung,
- Fig. 3: eine weitere Ausführungsform eines erfindungsgemäßen Kupplungskörpers in einer Figurenhälfte in Ansicht und in der anderen Figurenhälfte im Längsschnitt,
- Fig. 4: den Kupplungskörper gemäß Figur 3 mit eingesteckter Rohrleitung,
- Fig. 5: eine Detailansicht im Längsschnitt eines erfindungsgemäßen Distanzelementes mit dem zugehörigen Halteelement und
- Fig. 6: eine weitere Ausführung eines erfindungsgemäßen Kupplungskörpers teilweise im Längsschnitt.

In den verschiedenen Figuren der Zeichnung sind gleiche bzw. funktionsgleiche Teile stets mit denselben Bezugszeichen versehen.

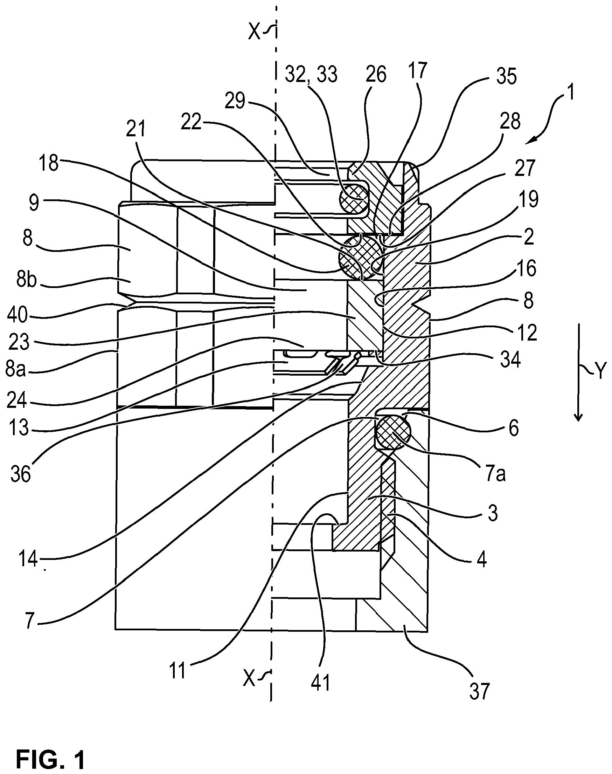

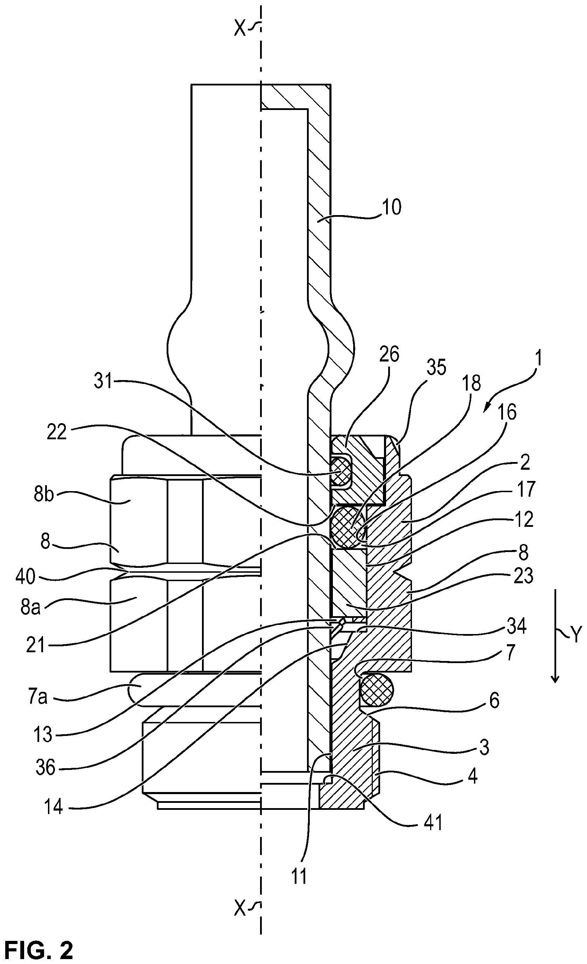

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist. Wie zum Beispiel anhand Figur 1 erläutert wird, umfasst ein erfindungsgemäßer Kupplungskörper 1 zum Anschluss durch Einstecken einer in Figur 1 nicht dargestellten Rohrleitung, zum Beispiel aus Kunststoff, eine Überwurfschraube 2 mit einem Schraubenschaft 3. An seinem in Einschraubrichtung Y vorderen Bereich weist der Schraubenschaft 3 einen Außengewindeabschnitt 4 auf. Der Außengewindeabschnitt 4 besitzt insbesondere ein metrisches Außengewinde. Vorzugsweise schließt sich entgegen der Einschraubrichtung Y ein Dichtungsabschnitt 6 an, der eine umfänglich verlaufende Dichtungsnut 7 besitzt, in der eine ringförmige Dichtung 7a angeordnet sein kann. Weiterhin weist die Überwurfschraube 2 einen Betätigungsabschnitt 8 auf, der sich entgegen der Einschraubrichtung Y vom Schraubenschaft 3 weg erstreckt. Dieser Bestätigungsabschnitt 8 ist insbesondere als Außenmehrkant, insbesondere Außensechskant ausgebildet. Die Überwurfschraube 2 weist eine innere Durchgangsöffnung 9 auf, in die die anzuschließende Rohrleitung 10, siehe Fig. 2, eingesteckt wird. Die Durchgangsöffnung 9 besitzt insbesondere einen in Einschraubrichtung Y gesehen vorderen Führungsabschnitt 11 und einen in Einschraubrichtung Y hinter diesem sich anschließenden Halte- und Dichtungsabschnitt 12. Wie in Fig. 2 zu erkennen ist, weist der Führungsabschnitt 11 einen Innendurchmesser auf, der dem Außendurchmesser der Rohrleitung 10 derart angepasst ist, dass diese in diesem Führungsabschnitt 11 umfangsgemäß geführt ist. Weiterhin ist am in Einschraubrichtung Y gesehen vorderen Bereich der Durchgangsöffnung 9 ein Halteelement 13 angeordnet, mit dem die anzuschließende und durch die Durchgangsöffnung 9 hindurch gesteckte Rohrleitung 10 in ihrer Lage innerhalb des Kupplungskörpers 1 fixierbar ist. Dieses Halteelement 13 ist als Zahnscheibe oder Zahnring ausgebildet und liegt auf einer in der Durchgangsöffnung 9 ausgebildeten Anlageschulter 14 auf. Diese am Innenumfang der Durchgangsöffnung 9 verlaufende Anlageschulter 14 entsteht durch eine Durchmesserverringerung der Durchgangsöffnung 9, vorzugsweise am Übergang, der konisch ausgebildet ist, zum Führungsabschnitt 11. Der Halte- und Dichtabschnitt 12 weist zum Beispiel einen größeren Außendurchmesser auf als der Außengewindeabschnitt 4. In seiner inneren Umfangsfläche 16 besitzt der Halte- und Dichtabschnitt 12 in einer inneren Umfangsnut 17 ein ringförmiges Dichtelement 18 als Innendichtung, die zum Abdichten des bestehenden Umfangsspaltes zwischen der eingesteckten Rohrleitung 10 und dem Halte- und Dichtabschnitt 12 dient gegen Austritt eines in der Rohrleitung 10 vorhandenen Druckmediums. Vorzugsweise ist das ringförmige Dichtelement 18 als ein O-Dichtring ausgebildet und besteht aus einem elastisch verformbaren Material. Die Umfangsnut 17 weist einen Nutgrund 19 auf, der axial in Einschraubrichtung Y verläuft und einander gegenüberliegende, im Nutgrund 19 endende Nut-Seitenwände 21, 22 besitzt, so dass die Umfangsnut 17 im Längsschnitt gesehen U-förmig ausgebildet ist. Die Seitenwände 21, 22 verlaufen vorzugsweise senkrecht zum Nutgrund 19.

Zwischen dem Halteelement 13 und dem Dichtelement 18 ist ein hülsenförmiges Distanzelement 23 angeordnet. Das Distanzelement 23 weist eine Durchstecköffnung 24 auf, die dem Außendurchmesser der einzusteckenden Rohrleitung 10 angepasst ist. Das Halteelement 13 ist zwischen einem in Einschraubrichtung Y vorderen Stirnende des Distanzelementes 23 und der Anlageschulter 14 gehalten. Die in Einschraubrichtung Y hintere Stirnfläche des Distanzelementes 23 bildet die in Einschraubrichtung Y vordere Seitenwand 21 der inneren Umfangsnut 17.

Bei dem in Fig. 1 und 2 gezeigten Ausführungsbeispiel wirkt das Distanzelement 23 unmittelbar auf das Dichtelement 18 ein. Im gezeigten Ausführungsbeispiel ist in die Durchgangsöffnung 9 in ihrem oberen, in Einschraubrichtung Y gesehen hinteren Abschnitt ein Verschlusselement 26 eingesetzt, das derart ausgebildet ist, dass seine in Einschraubrichtung Y vordere Stirnfläche die in Einschraubrichtung Y hintere Nutwand 22 der inneren Umfangsnut 17 bildet. Zudem liegt das Verschlusselement 26 im eingesetzten Zustand mit seiner vorderen Stirnfläche 27 an einer Stufenfläche 28 in der Durchgangsöffnung 9 an. Innerhalb des Verschlusselementes 26 ist eine Durchstecköffnung 29 für die einzusteckende Rohrleitung 10 ausgebildet, und in der inneren Umfangsfläche der Durchstecköffnung 29 des Verschlusselementes 26 ist eine Dichtungsanordnung 31 aus einer Innennut 32 und einem Dichtring 33 vorgesehen, der die eingesteckte Rohrleitung 10 umfangsgemäß gegen das Eindringen von Schmutzpartikeln abdichtet. Das Verschlusselement 26 wird insbesondere durch eine Umbördelung eines Bördelfortsatzes 35 am in Einschraubrichtung Y hinteren Ende der Überwurfschraube 2 fixiert. Diese Fixierung kann aber auch durch Einpressen oder Einrasten des Verschlusselementes 26 erfolgen. Es erfolgt eine unlösbare, d. h. nicht zerstörungsfreie Verbindung zwischen dem Verschlusselement 26 und der Überwurfschraube 2.

Das hülsenförmige Distanzelement 23 ist in seiner Länge in axialer Richtung derart dimensioniert, dass im Belastungsfall des Halteelementes 13, d. h. der Zahnscheibe oder des Zahnrings, durch das Eingreifen der Zähne in die Umfangswandung der eingesteckten Rohrleitung 10 eine in dieser auftretende Einbuchtung im Sinne einer Außendurchmesser- und gegebenenfalls auch Innendurchmesserreduzierung überbrückt wird, so dass die Umfangsdichtung, d. h. das Dichtelement 18 im Bereich der unverformten Rohrleitung 10 verläuft, so dass das Dichtelement 18 in seiner Dichtwirkung gegenüber der eingesteckten Rohrleitung 10 nicht beeinträchtigt wird, wenn im Belastungsfall die Rohrleitung 10 und der Kupplungskörper 1 von einem in der Rohrleitung 10 vorhandenen Druckmedium, insbesondere einem gasförmigen Medium, mit Druck beaufschlagt werden. In diesem Belastungsfall wird die Rohrleitung 10 an ihrem freien Rohrleitungsende derart an ihrer endseitigen Stirnfläche mit Druck beaufschlagt, dass die Rohrleitung 10 entgegen der Einschraubrichtung Y aus dem Kupplungskörper 1 herausgedrückt wird. Hierbei graben sich die Zähne des Halteelementes 13 in die Wandung der Rohrleitung 10 ein und verhindern ein Lösen der Rohrleitung 10 aus dem Kupplungskörper 1.

Hierbei basiert die Erfindung auf der Erkenntnis, dass durch das Eingraben und die dabei radial gerichteten Kräfte der Zähne die im Obigen beschriebene Einbuchtung der Wandung der Rohrleitung 10 entsteht. Eine derartige Einbuchtung kann zum Beispiel eine axiale Länge von 2 bis 3 mm besitzen. Die Größe der Einbuchtung hängt insbesondere von der Dimensionierung der Rohrleitung 10, dem Material der Rohrleitung 10, der jeweilig herrschenden Temperatur und den auftretenden Druckkräften und der Gestalt des Halteelementes 13 ab.

Bei der in den Figuren 1 und 2 gezeigten Ausführungsform, bei der insbesondere das Distanzelement 23 im Querschnitt gesehen einen kreisförmigen Ringquerschnitt besitzt, wird das Distanzelement 23 bei Druckbeaufschlagung der Rohrleitung 10 von dem Halteelement 13 gegen das Dichtelement 18 gedrückt. Hierdurch erhöht sich die Verpressung des Dichtelementes 18 innerhalb der Umfangsnut 17, so dass die Flächenpressung des Dichtelementes 18 an seinen Anlageflächen der Umfangsnut 17 und an der Umfangsfläche 16 der eingesteckten Rohrleitung 10 erhöht wird. Durch diese Verpressung des Dichtelementes 18 verringert sich die Größe der Stoff- bzw. Gasaustrittsfläche des Dichtelementes 18 im Bereich des Dichtspaltes zwischen der eingesteckten Rohrleitung 10 und der inneren Umfangswandung der Durchgangsöffnung 9 im Bereich in Einschraubrichtung Y gesehen hinter der Innendichtung bzw. dem Dichtelement 18. Somit ermöglicht die Anordnung des Distanzelementes 23, dass es bei Druckbeaufschlagung der Rohrleitung 10 gegen die Innendichtung bzw. das Dichtelement 18 gedrückt wird, und eine erhöhte Dichtheit aufgrund der Verringerung der Permeation des Druckmediums, insbesondere Gas bzw. Luft, durch das Dichtelement 18.

In Fig. 1 besitzt das hülsenförmige Distanzelement 23 einen Außendurchmesser derart, dass es unter Anlage an der inneren Umfangsfläche der Durchgangsöffnung 9, die in ihrem Halte- und Dichtabschnitt 12 über dessen Länge denselben Durchmesser besitzt, frei verschiebbar ist. Ein gemäß der Erfindung verwendetes Halteelement 13 besitzt einen äußeren umfangsgemäß ausgebildeten Auflageabschnitt 34, an dem radial und axial, d. h. schräg zur Längsachse X-X verlaufende Zähne 36 umfangsgemäß beabstandet zueinander ausgeformt sind. Der Außendurchmesser des Halteelementes 13 im Bereich seines Auflageabschnitts 34 ist derart, dass das Halteelement 13 innerhalb des Halte- und Dichtabschnitts 12 frei verdrehbar gelagert ist.

Wie in Fig. 1 dargestellt ist, wird der erfindungsgemäße Kupplungskörper 1 mit seinem Außengewindeabschnitt 4 in einen Anschlusskörper 37 in eine Gewindebohrung eingeschraubt.

Die Zähne 36 des Halteelementes 13 umschließen endseitig eine Öffnung, deren Innendurchmesser kleiner ist als der Außendurchmesser der einzusteckenden Rohrleitung 10, so dass beim Einstecken der Rohrleitung 10 die von den Zähnen umschlossene Öffnung im Durchmesser vergrößert wird, indem die Zähne 36 elastisch verformt werden und im eingesteckten, noch drucklosen Zustand der Rohrleitung 10 kraftschlüssig am Umfang der Rohrleitung 10 aufliegen.

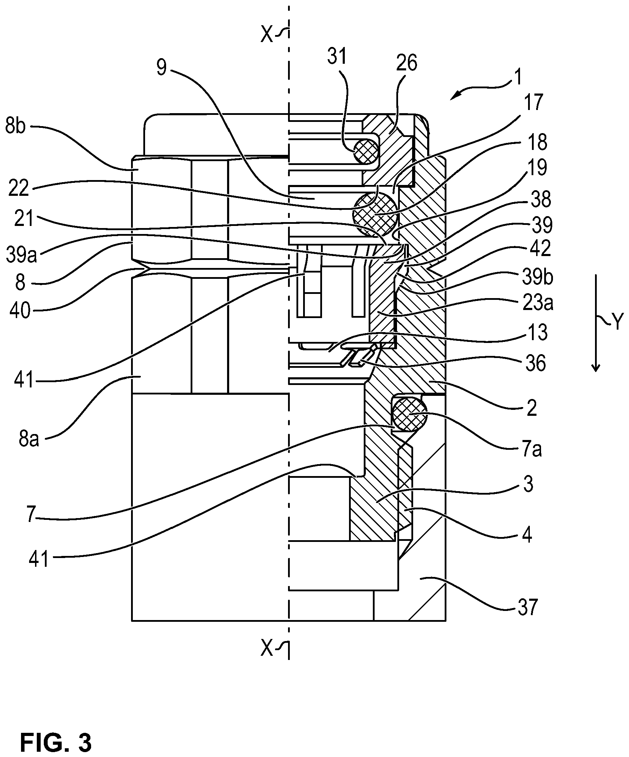

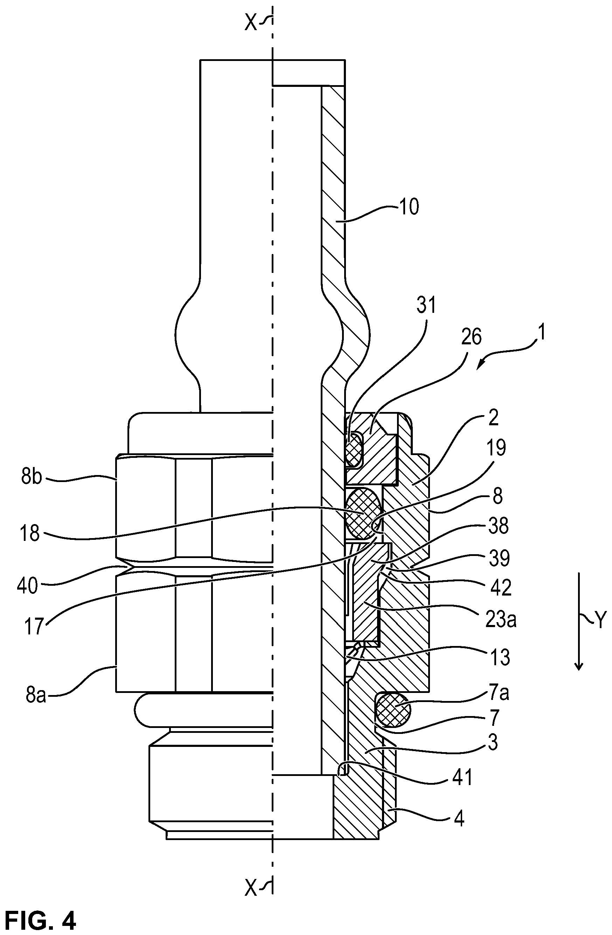

In den Figuren 3 und 4 ist eine weitere Ausbildung eines erfindungsgemäßen hülsenförmigen Distanzelementes 23 gezeigt. Dieses Distanzelement 23 besitzt an seinem in Einschraubrichtung Y hinteren Endbereich an seinem äußeren Umfang einen umlaufenden Haltebund 38. Dieser Haltebund 38 ist innerhalb einer zur Durchgangsöffnung 9 offenen Haltenut 39 in der inneren Umfangswandung im Bereich des Halte- und Dichtabschnitts 12 der Durchgangsöffnung 9 rastend angeordnet. Hierzu ist das Distanzelement 23 zumindest im Bereich des Haltebundes 38 radial elastisch verformbar ausgebildet, wozu insbesondere in der Wandung des Distanzelementes 23 axial verlaufende, umfangsgemäß beabstandete Schlitze 41 ausgebildet sind. Es kann aber auch nur ein durchgehender Schlitz vorhanden sein. Das Distanzelement 23 ist zwischen dem auf der Anlageschulter 14 angeordneten Halteelement 13, d. h. der Zahnscheibe bzw. dem Zahnring, und einer in Einschraubrichtung Y gesehen hinteren Seitenwand 39a der Haltenut 39 gelagert.

Hierdurch werden die auf das Halteelement 13 wirkenden Druckkräfte im Belastungsfall über diese Seitenwand 39a der Haltenut 39 auf die Überwurfschraube 2 übertragen und wirken nicht auf das Dichtelement 18, so dass das Dichtelement 18 druckmäßig entlastet wird. Der Haltebund 38 und die Haltenut 39 können auch an einer anderen Stelle des Distanzelementes 23 angeordnet sein.

Damit ein Einrasten des Haltebundes 38 hinter der Seitenwand 39a erleichtert wird, besitzt dieser vorteilhafterweise an seiner in Einschraubrichtung Y weisenden Stirnfläche eine Einführungsschräge 42. Zweckmäßigerweise ist die der Einführungsschräge 42 zugekehrte Seitenwand 39b der Haltenut 39 entsprechend abgeschrägt. Auch bei dieser Ausführungsform der Figuren 3 und 4 wird die vordere Seitenwand 21 der Umfangsnut 17 für das Dichtelement 18 von der in Einschraubrichtung Y gesehen hinteren Stirnfläche des Distanzelementes 23 gebildet, und die andere, gegenüberliegende Seitenwand 22 der Umfangsnut 17 wird von dem Verschlusselement 26 gebildet. Was die Ausbildung des Verschlusselementes 26 und dessen Befestigung betrifft, so wird auf die Beschreibung zu den Figuren 1 und 2 voll umfänglich verwiesen.

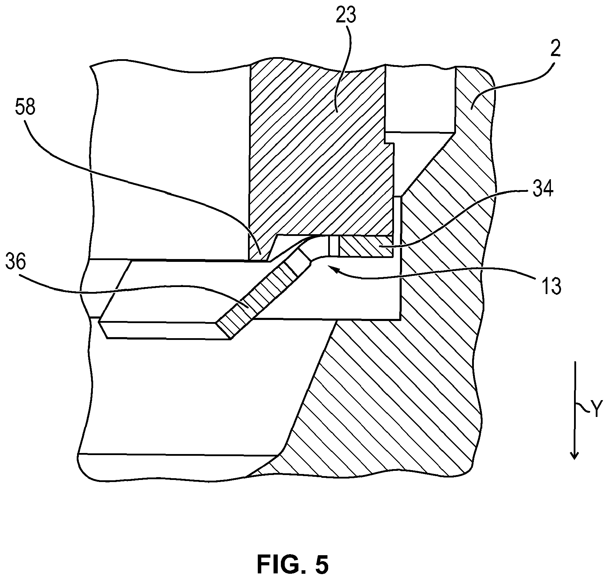

In Figur 5 ist eine vorteilhafte Ausbildung der erfindungsgemäßen Distanzelemente gezeigt. Hierbei besitzt das Distanzelement 23 an seinem in Einschraubrichtung Y vorderen Ende an dem Rand der Durchstecköffnung 24 eine in axialer Richtung abstehende Haltenase 58. Diese Haltenase 58 ist derart ausgebildet, dass sie vor den Zähnen 36 endet. Im Belastungsfall des Halteelementes 13 werden die Zähne 36 durch die Haltenase 58 abgestützt, so dass höhere Rohrauszugskräfte möglich sind. Hierbei liegt das beste Kräfteverhältnis vor, wenn die Zähne 36 in einem Winkel von 30° bis 60°, insbesondere 45° zur Rohrleitung 10 positioniert sind. Die Größe des Eingreifwinkels, insbesondere von 45°, kann durch die Größe der Haltenase 58 eingestellt werden. Zudem kann das auf das Halteelement 13 ausgeübte Drehmoment reduziert werden.

In den Figuren 2 und 4 ist die erfindungsgemäße Überwurfschraube 2 mit eingesteckter Rohrleitung 10 im ausgeschraubten Zustand aus dem Anschlusskörper 37 gezeigt. Die in der Überwurfschraube 2 eingesteckte Rohrleitung 10 bleibt bei dem Herausschrauben der Überwurfschraube 2 gesteckt. Dies ist erfindungsgemäß deshalb möglich, da erfindungsgemäß das Halteelement 13 in seinen Abmessungen derart bemessen ist, dass es frei drehbar um die Längsachse X-X innerhalb des Halte- und Dichtabschnitts 12 der Durchgangsöffnung 9 gelagert ist. Erfindungsgemäß dreht sich der Kupplungskörper 1 beim Herausdrehen aus dem Anschlusskörper 37 um die eingesteckte Rohrleitung 10 herum, so dass die eingesteckte Rohrleitung 10 sich nicht verwindet, denn das Halteelement 13 ist im montierten Zustand rotatorisch nicht fixiert.

Bei der erfindungsgemäßen Überwurfschraube 2 ist es von Vorteil, wenn am in Einschraubrichtung Y vorderen Ende der Durchgangsöffnung 9 ein Anschlagbund 41 durch eine Durchmesserreduzierung des Innendurchmessers ausgebildet ist. Dieser Anschlagbund 41 ist einerseits ein Tiefenanschlag, der beim Einstecken der Rohrleitung 10 deren Einstecktiefe begrenzt, und andererseits verhindert er, dass im ausgeschraubten Zustand der Überwurfschraube 2 sich der Kupplungskörper 1 aus dem Anschlusskörper 37 auf der eingesteckten Rohrleitung 10 axial verschieben lässt. Vorteilhafterweise ist der Innendurchmesser des Anschlagbundes 41 größer als der Innendurchmesser der anzuschließenden Rohrleitung 10 oder gleich dem Innendurchmesser der Rohrleitung 10, so dass der innere Rohrquerschnitt nicht unterschritten wird, und somit Strömungsverluste vermieden werden.

In den Figuren 1 bis 4 weist die Überwurfschraube 2 im Erstreckungsbereich zwischen dem ringförmigen Halteelement 13 und dem Dichtelement 18 eine Materialschwächungsstelle 40 als Sollbruchstelle in der Wandung der Überwurfschraube 2 auf, die derart ausgebildet ist, dass der Betätigungsabschnitt 8 in zwei Teilabschnitte 8a, 8b unterteilt ist, und insbesondere durch gegenläufiges Verdrehen der Teilabschnitte 8a, 8b die Überwurfschraube 2 im Bereich der Sollbruchstelle aufgebrochen werden kann. Zweckmäßigerweise ist die Materialschwächungsstelle 40, wie in den Figuren 1 bis 4 gezeigt, als am Außenumfang des Betätigungsabschnitts 8 vorhandene umfängliche Einkerbung ausgebildet. Erfindungsgemäß ist der Durchmesser vom Innenraum der Durchgangsöffnung 9, die Formgebung der Einkerbung bzw. der Materialschwächungsstelle 40 derart aufeinander abgestimmt, dass das Bruchmoment der Materialschwächungsstelle 40 bzw. der Sollbruchstelle größer ist als das Anzugsmoment des Außengewindeabschnitts 4 in einem Innengewinde eines Anschlussstücks, in das der erfindungsgemäße Kupplungskörper 1 mit seinem Außengewindeabschnitt 4 eingeschraubt wird. Diese Bemessung gilt insbesondere für den Fall, dass die beiden Teilabschnitte 8a, 8b den gleichen Außendurchmesser bzw. die gleiche Schlüsselweite ihrer Angriffsflächen für einen Anzugsschlüssel besitzen. Es kann erfindungsgemäß zweckmäßig sein, wenn der Außendurchmesser bzw. die Schlüsselweite der Teilabschnitte 8a, 8b des Betätigungsabschnitts 8 unterschiedlich groß ist. Ist z. B. die Schlüsselweite des in Einschraubrichtung Y vorderen Teilabschnitts 8a größer als die des anderen Teilabschnitts 8b, kann das Bruchmoment der Materialschwächungsstelle 40 kleiner als das Einschraubmoment bzw. Anzugsmoment des Außengewindeabschnitts 4 sein.

Es ist zweckmäßig, wenn die Sollbruchstelle bzw. die Einkerbung 40 in einer Ebene, die senkrecht zur Längsachse X-X im Bereich des Distanzelementes 23 verläuft, liegt, siehe Fig. 1 und 2.

Bei der Ausführungsform gemäß den Figuren 3 und 4 liegt die Materialschwächungsstelle bzw. die Sollbruchstelle 40 in Form der Einkerbung in einer Ebene, die senkrecht zur Längsachse X-X im Bereich der Haltenut 39 verläuft, so dass nach der Trennung der beiden Teilabschnitte 8a, 8b voneinander der Haltebund 38 freiliegt und nach Entfernen des Halteelementes 13 mittels Aufschneiden das Distanzelement 23 abgezogen werden kann. Zudem liegt die Einkerbung im Bereich der geringsten Wandstärke der Überwurfschraube 2.

Der Lösevorgang eines erfindungsgemäßen Kupplungskörpers 1 mit eingesteckter Rohrleitung 10 erfolgt demnach wie folgt. Zunächst wird der Kupplungskörper 1 aus der Gewindebohrung des Anschlusskörpers herausgeschraubt. Danach wird der Betätigungsabschnitt 8 durch gegenläufiges Drehmoment an den beiden Teilabschnitten 8a, 8b des Betätigungsabschnitts 8 an der Sollbruchstelle bzw. der Einkerbung 40 getrennt. Danach erfolgt das Lösen des Rohres, indem das Halteelement 13 durch Zerstörung entfernt wird und danach das Rohr aus dem in Einschraubrichtung Y hinteren Teilabschnitt 8b herausgezogen wird. Das derart gelöste Rohr bzw. die Rohrleitung 10 kann dann wiederverwendet werden.

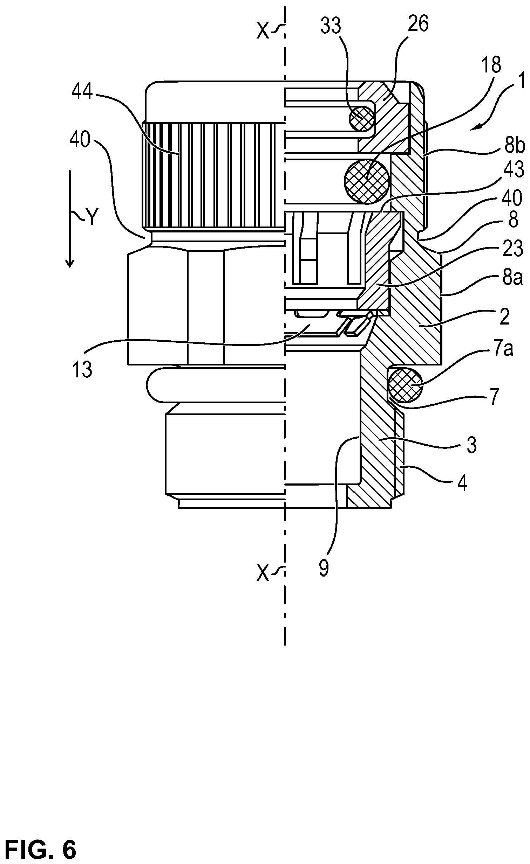

In Fig. 6 ist eine weitere erfindungsgemäße Ausbildung einer Überwurfschraube 2 dargestellt. Hierbei ist der obere Teilabschnitt 8b des Betätigungsabschnitts 8 der Überwurfschraube 2 derart in Größe und/oder Form ausgebildet, dass er sich von üblichen Werkzeug-Betätigungskonturen, wie z. B. 6-Kant-Konturen, unterscheidet, so dass z. B. ein Spezialwerkzeug zum Betätigen verwendet werden muss. Hierdurch wird ein versehentliches Betätigen, d. h. Anziehen bzw. Einschrauben über dem oberen Teilabschnitt 8b, und damit eine Belastung der Sollbruchstelle beim Ein- oder Herausschrauben der Überwurfschraube 2 minimiert. Es kann z. B. am oberen Teilabschnitt 8b am Umfang eine 3-Kant-Kontur ausgebildet sein oder eine Verzahnung oder die Ausbildung eines Rillenprofils aus parallel zur Längsachse X-X verlaufenden Rillen 44. Ein derartiges Rillenprofil ist insbesondere als Zangenangriffsprofil geeignet, wie in Fig. 6 dargestellt. Der Außendurchmesser des oberen Teilabschnitts 8b ist z. B. kleiner als die Schlüsselweite des unteren Teilabschnitts 8a, der z. B. als Sechskant ausgebildet ist. Im Übrigen entspricht die Ausführung in Fig. 6 der Ausführung in Fig. 3.

Weiterhin ist es zweckmäßig, wenn das Distanzelement 23 mit seinem oberen, in Richtung auf das Verschlusselement 26 weisenden Ende 43 unterhalb des Dichtelementes 18 angeordnet ist. Dies hat den Vorteil, dass zum Abdichten gegen Fluidaustritt grundsätzlich nur das Dichtelement 18 als einzige Dichtung erforderlich ist. Das weitere Dichtelement 31 dient im Wesentlichen als Dichtelement gegen Eindringen von Schmutzpartikeln. Diese Ausbildung ist z. B. in allen Figuren 1 bis 6 dargestellt.
Die Erfindung ist nicht auf die dargestellten und beschriebenen Ausführungsbeispiele beschränkt, sondern umfasst auch alle im Sinne der Erfindung gleichwirkenden Ausführungen. Insbesondere bezieht sich die Erfindung auch auf einen Kupplungskörper ohne Distanzelement 23 so dass das Dichtelement 18 oberhalb des Halteelementes 13 ohne Distanzelement angeordnet ist. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben.

### Bezugszeichen

- 1: Kupplungskörper
- 2: Überwurfschraube
- 3: Schraubenschaft
- 4: Außengewindeabschnitt
- 6: Dichtungsabschnitt
- 7: Dichtungsnut
- 7a: Dichtung
- 8: Betätigungsabschnitt
- 8a: Teilabschnitt
- 8b: Teilabschnitt
- 9: Durchgangsöffnung
- 10: Rohrleitung
- 11: Führungsabschnitt
- 12: Halte- und Dichtungsabschnitt
- 13: Halteelement
- 14: Anlageschulter
- 16: Innere Umfangsfläche
- 17: Innere Umfangsnut
- 18: Dichtelement
- 19: Nutgrund
- 21: Vordere Seitenwand
- 22: Hintere Seitenwand
- 23: Distanzelement
- 24: Durchstecköffnung des Distanzelementes
- 26: Verschlusselement
- 27: Vordere Stirnfläche
- 28: Stufenfläche
- 29: Durchstecköffnung des Verschlusselementes
- 31: Dichtungsanordnung
- 32: Innennut
- 33: Dichtring
- 34: Auflageabschnitt
- 35: Bördelfortsatz
- 36: Zähne
- 37: Anschlusskörper
- 38: Haltebund
- 39: Haltenut
- 39a,b: Seitenwand
- 40: Materialschwächungsstelle
- 41: Anschlagbund
- 42: Einführungsschräge
- 43: Oberes Ende
- 44: Rillen
- X-X: Längsachse
- Y: Einschraubrichtung

## Patentansprüche

1. Kupplungskörper zum Steckanschluss einer Rohrleitung (10), insbesondere einer Kunststoffrohrleitung, umfassend eine Überwurfschraube (2) mit einem Schraubenschaft (3), an dessen in Einschraubrichtung (Y) vorderen Bereich ein Außengewindeabschnitt (4) ausgebildet ist und hieran sich entgegen der Einschraubrichtung (Y) ein Betätigungsabschnitt (8) anschließt, und wobei in axialer Richtung durch die Überwurfschraube (2) eine innere Durchgangsöffnung (9) verläuft, wobei in der Durchgangsöffnung (9) eine sich radial zur Längsachse (X-X) nach innen gerichtete Anlageschulter (14) erstreckt, auf der ein ringförmiges Halteelement (13), insbesondere eine Zahnscheibe oder ein Zahnring angeordnet ist, und in Einschraubrichtung (Y) gesehen hinter dem Halteelement (13) in einer zur Durchgangsöffnung (9) randoffenen Umfangsnut (17) mit einem Nutgrund (19) und zwei im Nutgrund (19) endenden Nutseiten (21, 22) ein ringförmiges Dichtelement (18) angeordnet ist, und die Durchgangsöffnung (9) einseitig mit einem Verschlusselement (26) mit Durchstecköffnung (29) unlösbar verschlossen ist,
**dadurch gekennzeichnet, dass** im Erstreckungsbereich des ringförmigen Halteelementes (13) und des Dichtelementes (18) eine Materialschwächungsstelle (40) als Sollbruchstelle in der Wandung der Überwurfschraube (2) derart ausgebildet ist, dass der Betätigungsabschnitt (8) in zwei Teilabschnitte (8a, 8b) unterteilt ist, und durch gegenläufiges Verdrehen der Teilabschnitte (8a, 8b) die Überwurfschraube (2) aufgebrochen werden kann.

2. Kupplungskörper (1) nach Anspruch 1,
**dadurch gekennzeichnet, dass** die Materialschwächungsstelle (40) als am Außenumfang des Betätigungsabschnitts (8) vorhandene Einkerbung ausgebildet ist.

3. Kupplungskörper (1)nach Anspruch 1 oder 2,
**dadurch gekennzeichnet, dass** der Durchmesser vom Innenraum der Durchgangsöffnung (9) und die Formgebung der Einkerbung (40) derart aufeinander abgestimmt sind, dass das Bruchmoment der Materialschwächungsstelle (40) größer als das Anzugsmoment des Außengewindeabschnitts (4) der Überwurfschraube (2) ist bei gleich großen Außendurchmessern bzw. Schlüsselweiten der Teilabschnitte (8a, 8b).

4. Kupplungskörper (1) nach einem der Ansprüche 1 oder 2, **dadurch gekennzeichnet, dass** die Außendurchmesser oder die Schlüsselweiten der Teilabschnitte (8a, 8b) des Betätigungsabschnitts (8) unterschiedlich groß sind und das Bruchmoment der Materialschwächungsstelle (40) größer, gleich oder kleiner als das Anzugsmoment des Außengewindeabschnitts (4) ist.

5. Kupplungskörper (1) nach Anspruch 4,
**dadurch gekennzeichnet, dass** die Schlüsselweite oder der Durchmesser des in Einschraubrichtung (Y) vorderen Teilabschnitts (8a) größer oder kleiner ist als die Schlüsselweite oder der Durchmesser des anderen Teilabschnitts (8b).

6. Kupplungskörper (1) nach einem der Ansprüche 1 bis 5,
**dadurch gekennzeichnet, dass** zwischen dem Halteelement (13) und dem ringförmigen Dichtelement (18) ein hülsenförmiges Distanzelement (23) angeordnet ist, wobei das Halteelement (13) zwischen der in Einschraubrichtung (Y) vorderen Stirnseite des Distanzelementes (23) und der Anlageschulter (14) in axialer Richtung gehalten ist und die in Einschraubrichtung (Y) vordere Seitenwand (21) der Umfangsnut (17) durch die in Einschraubrichtung (Y) hintere Stirnfläche des Distanzelementes (23) gebildet wird, und wobei das hülsenförmige Distanzelement (23) eine derartige Länge in axialer Richtung besitzt, dass eine im Belastungsfall des Halteelementes (13) durch Eingraben von Zähnen (36) des Halteelementes (13) in eine Umfangswandung der in die Durchgangsöffnung (9) eingesteckten Rohrleitung (10) erzeugte Einbuchtung von dem Distanzelement (23) derart überbrückt ist, dass das ringförmige Dichtelement (18) im Bereich der unverformten Rohrwandung anliegt.

7. Kupplungskörper (1) nach Anspruch 6,
**dadurch gekennzeichnet, dass** das Distanzelement (23) unmittelbar mit dem Dichtelement (18) unter gegenseitiger Anlage zusammenwirkt.

8. Kupplungskörper (1) nach Anspruch 6 oder 7,
**dadurch gekennzeichnet, dass** das hülsenförmige Distanzelement (23) einen zylindrischen Körper aufweist mit einem in Bezug auf die Längsachse (X-X) kreisringförmigen Querschnitt.

9. Kupplungskörper (1) nach einem der Ansprüche 6 bis 8,
**dadurch gekennzeichnet, dass** das hülsenförmige Distanzelement (23) in seinem in Einschraubrichtung (Y) hinteren Endbereich an seinem äußeren Umfang einen umlaufenden Haltebund (38) aufweist, wodurch das Distanzelement (23) innerhalb einer inneren, zur Durchgangsöffnung (9) offenen Haltenut (39) in der Durchgangsöffnung (9) gehalten ist.

10. Kupplungskörper (1) nach Anspruch 9,
**dadurch gekennzeichnet, dass** das Distanzelement (23) mit seiner in Einschraubrichtung (Y) hinteren Stirnseite die in Einschraubrichtung (Y) gesehen vordere Nutwandung (21) der Umfangsnut (17) bildet und zwischen einer in Einschraubrichtung (Y) hinteren Seitenwand (39a) der Haltenut (39) und dem Halteelement (13) gelagert ist.

11. Kupplungskörper (1) nach einem der Ansprüche 6 bis 10,
**dadurch gekennzeichnet, dass** in der Durchgangsöffnung (9) an ihrem in Einschraubrichtung (Y) hinteren Ende ein Verschlusselement (26) mit einer Durchstecköffnung (29) befestigt ist, das mit seiner vorderen Stirnfläche die hintere Seitenwand (22) der Umfangsnut (17) bildet.

12. Kupplungskörper (1) nach Anspruch 10 oder 11,
**dadurch gekennzeichnet, dass** das hülsenförmige Distanzelement (23) im Bereich des Haltebundes (38) in radialer Richtung elastisch verformbar ausgebildet ist und in der Haltenut (39) rastend, insbesondere formschlüssig gehalten ist.

13. Kupplungskörper (1) nach einem der Ansprüche 1 bis 12,
**dadurch gekennzeichnet, dass** am in Einschraubrichtung (Y) vorderen Ende der Durchgangsöffnung (9) ein Anschlagbund (41) durch eine Durchmesserreduzierung des Innendurchmessers ausgebildet ist, wobei insbesondere der Innendurchmesser des Anschlagbundes (41) größer/gleich dem Innendurchmesser einer einzusteckenden Rohrleitung (10) ist.

14. Kupplungskörper (1) nach einem der Ansprüche 1 bis 13,
**dadurch gekennzeichnet, dass** das Halteelement (13) in seinen Abmessungen derart bemessen ist, dass es frei drehbar innerhalb der Durchgangsöffnung (9) gelagert ist.

15. Kupplungskörper (1) nach einem der Ansprüche 6 bis 14, **dadurch gekennzeichnet, dass** das Distanzelement (23) mit einem oberen Ende (43) unterhalb des Dichtelementes (18) zur fluidischen Abdichtung angeordnet ist.

16. Kupplungskörper (1) nach einem der Ansprüche 6 bis 15,
**dadurch gekennzeichnet, dass** die Materialschwächungsstelle (40) im Bereich des Distanzelementes (23) ausgebildet ist.

## Claims

1. Coupling body for the plug-in connection of a pipeline (10), in particular of a plastic pipeline, comprising a sleeve nut (2) with a screw shank (3), an externally threaded portion (4) being formed at the front region of the screw shank, as seen in the screw-in direction (Y), and the externally threaded portion being adjoined, counter to the screw-in direction (Y), by an actuating portion (8), and wherein an inner through-passage opening (9) runs in the axial direction through the sleeve nut (2), wherein the through-passage opening (9) has extending in it an abutment shoulder (14), which is directed radially inwards in relation to the longitudinal axis (X-X) and on which an annular retaining element (13), in particular a toothed disc or a toothed ring, is arranged, and, in a circumferential groove (17) which is open at the periphery in relation to the through-passage opening (9) and has a base (19) and two sides (21, 22) terminating in the base (19), an annular sealing element (18) is arranged behind the retaining element (13), as seen in the screw-in direction (Y), and the through-passage opening (9) is closed in a non-releasable manner at one end by a closure element (26) with a plug-through opening (29), **characterized in that**, in the region of extent of the annular retaining element (13) and of the sealing element (18), a material-weakening point (40) is designed in the form of a predetermined breaking point in the wall of the sleeve nut (2) such that the actuating portion (8) is subdivided into two sub-portions (8a, 8b), and the sleeve nut (2) can be broken apart by virtue of the sub-portions (8a, 8b) being rotated in opposite directions.

2. Coupling body (1) according to Claim 1,
**characterized in that** the material-weakening point (40) is designed in the form of a notch which is present on the outer circumference of the actuating portion (8).

3. Coupling body (1) according to Claim 1 or 2,
**characterized in that** the diameter of the interior of the through-passage opening (9) and the shaping of the notch (40) are coordinated with one another such that the failure moment of the material-weakening point (40) is greater than the tightening moment of the externally threaded portion (4) of the sleeve nut (2), the sub-portions (8a, 8b) having equal-size external diameters or widths across flats.

4. Coupling body (1) according to either of Claims 1 and 2,
**characterized in that** the external diameters or the widths across flats of the sub-portions (8a, 8b) of the actuating portion (8) are of different sizes and the failure moment of the material-weakening point (40) is greater than, equal to or smaller than the tightening moment of the externally threaded portion (4) .

5. Coupling body (1) according to Claim 4,
**characterized in that** the width across flats or the diameter of the front sub-portion (8a), as seen in the screw-in direction (Y), is greater than or smaller than the width across flats or the diameter of the other sub-portion (8b).

6. Coupling body (1) according to one of Claims 1 to 5,
**characterized in that** a sleeve-like spacer element (23) is arranged between the retaining element (13) and the annular sealing element (18), wherein the retaining element (13) is retained in the axial direction between the front end side of the spacer element (23), as seen in the screw-in direction (Y), and the abutment shoulder (14), and the front side wall (21) of the circumferential groove (17), as seen in the screw-in direction (Y), is formed by the rear end surface of the spacer element (23), as seen in the screw-in direction (Y), and wherein the sleeve-like spacer element (23) has such a length in the axial direction that an indentation produced in the case of the retaining element (13) being subjected to loading as a result of teeth (36) of the retaining element (13) digging into a circumferential wall of the pipeline (10) plugged into the through-passage opening (9) is bridged by the spacer element (23) such that the annular sealing element (18) butts against the region of the non-deformed pipe wall.

7. Coupling body (1) according to Claim 6,
**characterized in that** the spacer element (23) interacts directly with the sealing element (18), with mutual abutment.

8. Coupling body (1) according to Claim 6 or 7,
**characterized in that** the sleeve-like spacer element (23) has a cylindrical body with a cross section in the form of a circular ring, as seen in relation to the longitudinal axis (X-X).

9. Coupling body (1) according to one of Claims 6 to 8,
**characterized in that** in its rear end region, as seen in the screw-in direction (Y), the sleeve-like spacer element (23) has an encircling retaining collar (38) on its outer circumference, as a result of which the spacer element (23) is retained within an inner retaining groove (39) in the through-passage opening (9), said retaining groove being open in relation to the through-passage opening (9).

10. Coupling body (1) according to Claim 9,
**characterized in that** the spacer element (23) has its rear end side, as seen in the screw-in direction (Y), forming the front wall (21) of the circumferential groove (17), as seen in the screw-in direction (Y), and is mounted between a rear side wall (39a) of the retaining groove (39), as seen in the screw-in direction (Y), and the retaining element (13).

11. Coupling body (1) according to one of Claims 6 to 10,
**characterized in that** the through-passage opening (9) has fastened in it at its rear end, as seen in the screw-in direction (Y), a closure element (26) with a plug-through opening (29), the front end surface of said closure element forming the rear side wall (22) of the circumferential groove (17).

12. Coupling body (1) according to Claim 10 or 11,
**characterized in that**, in the region of the retaining collar (38), the sleeve-like spacer element (23) is designed for elastic deformation in the radial direction and is retained in a latching manner, in particular in a form-fitting manner, in the retaining groove (39).

13. Coupling body (1) according to one of Claims 1 to 12,
**characterized in that** a stop collar (41) is formed at the front end of the through-passage opening (9), as seen in the screw-in direction (Y), by a reduction in the internal diameter, wherein in particular the internal diameter of the stop collar (41) is greater than/equal to the internal diameter of a pipeline (10) which is to be plugged in.

14. Coupling body (1) according to one of Claims 1 to 13,
**characterized in that** the retaining element (13) is dimensioned such that it is mounted in a freely rotatable manner within the through-passage opening (9) .

15. Coupling body (1) according to one of Claims 6 to 14,
**characterized in that** the spacer element (23) has an upper end (43) arranged beneath the sealing element (18) for fluid-sealing purposes.

16. Coupling body (1) according to one of Claims 6 to 15,
**characterized in that** the material-weakening point (40) is formed in the region of the spacer element (23) .

## Revendications

1. Corps d'accouplement pour le raccordement par enfichage d'une conduite tubulaire (10), en particulier d'une conduite tubulaire en plastique, comprenant un boulon chapeau (2) avec une tige de boulon (3) sur laquelle est réalisée une portion de filetage extérieur (4) au niveau de sa région avant, dans le sens de vissage (Y), et à laquelle se raccorde, dans le sens opposé au sens de vissage (Y), une portion d'actionnement (8), et une ouverture de passage interne (9) s'étendant à travers le boulon chapeau (2) dans la direction axiale, un épaulement d'appui (14) orienté vers l'intérieur radialement par rapport à l'axe longitudinal (X-X) s'étendant dans l'ouverture de passage (9), sur lequel épaulement d'appui est disposé un élément de retenue de forme annulaire (13), en particulier une rondelle dentée ou une bague dentée et, vu dans la direction de vissage (Y) derrière l'élément de retenue (13), un élément d'étanchéité de forme annulaire (18) étant disposé dans une rainure périphérique (17) ouverte au bord vers l'ouverture de passage (9), avec un fond de rainure (19) et deux côtés de rainure (21, 22) se terminant dans le fond de rainure (19), et l'ouverture de passage (9) étant fermée de manière inamovible d'un côté par un élément de fermeture (26) avec une ouverture d'enfichage (29),
**caractérisé en ce que** dans la région d'étendue de l'élément de retenue de forme annulaire (13) et de l'élément d'étanchéité (18) est réalisé un point d'affaiblissement de matériau (40) en tant que point destiné à la rupture dans la paroi du boulon chapeau (2) de telle sorte que la portion d'actionnement (8) soit divisée en deux portions partielles (8a, 8b), et que par rotation en sens inverse des portions partielles (8a, 8b), le boulon chapeau (2) puisse être cassé.

2. Corps d'accouplement (1) selon la revendication 1,
**caractérisé en ce que** le point d'affaiblissement de matériau (40) est réalisé sous forme d'encoche réalisée au niveau de la périphérie extérieure de la portion d'actionnement (8).

3. Corps d'accouplement (1) selon la revendication 1 ou 2,
**caractérisé en ce que** le diamètre de l'espace interne de l'ouverture de passage (9) et la forme de l'encoche (40) sont adaptés l'un à l'autre de telle sorte que le couple de rupture du point d'affaiblissement de matériau (40) soit supérieur au couple de serrage de la portion de filetage extérieur (4) du boulon chapeau (2) lorsque les diamètres extérieurs ou les largeurs de clés des portions partielles (8a, 8b) ont la même grandeur.

4. Corps d'accouplement (1) selon l'une quelconque des revendications 1 ou 2,
**caractérisé en ce que** les diamètres extérieurs ou les largeurs de clés des portions partielles (8a, 8b) de la portion d'actionnement (8) sont différents et le couple de rupture du point d'affaiblissement de matériau (40) est supérieur, égal ou inférieur au couple de serrage de la portion de filetage extérieur (4).

5. Corps d'accouplement (1) selon la revendication 4,
**caractérisé en ce que** la largeur de clé ou le diamètre de la portion partielle avant (8a) dans la direction de vissage (Y) est supérieur(e) ou inférieur(e) à la largeur de clé ou au diamètre de l'autre portion partielle (8b).

6. Corps d'accouplement (1) selon l'une quelconque des revendications 1 à 5,
**caractérisé en ce qu'**entre l'élément de retenue (13) et l'élément d'étanchéité annulaire (18) est disposé un élément d'espacement en forme de douille (23), l'élément de retenue (13) étant retenu entre le côté frontal avant de l'élément d'espacement (23) dans la direction de vissage (Y) et l'épaulement d'appui (14) dans la direction axiale, et la paroi latérale avant (21) de la rainure périphérique (17), dans la direction de vissage (Y), étant formée par la surface frontale arrière de l'élément d'espacement (23), dans la direction de vissage (Y), et l'élément d'espacement en forme de douille (23) possédant une longueur dans la direction axiale telle qu'un renfoncement généré en cas de sollicitation de l'élément de retenue (13) par l'enfoncement de dents (36) de l'élément de retenue (13) dans une paroi périphérique de la conduite tubulaire (10) enfichée dans l'ouverture de passage (9) soit surmonté par l'élément d'espacement (23) de telle sorte que l'élément d'étanchéité annulaire (18) s'applique dans la région de la paroi tubulaire non déformée.

7. Corps d'accouplement (1) selon la revendication 6,
**caractérisé en ce que** l'élément d'espacement (23) coopère directement avec l'élément d'étanchéité (18) par application l'un contre l'autre.

8. Corps d'accouplement (1) selon la revendication 6 ou 7,
**caractérisé en ce que** l'élément d'espacement en forme de douille (23) présente un corps cylindrique ayant une section transversale de forme annulaire circulaire par rapport à l'axe longitudinal (X-X).

9. Corps d'accouplement (1) selon l'une quelconque des revendications 6 à 8,
**caractérisé en ce que** l'élément d'espacement en forme de douille (23) présente, dans sa région d'extrémité arrière, dans la direction de vissage (Y), au niveau de sa périphérie extérieure, un épaulement de retenue périphérique (38), de sorte que l'élément d'espacement (23) soit retenu à l'intérieur d'une rainure de retenue interne (39), ouverte vers l'ouverture de passage (9), dans l'ouverture de passage (9).

10. Corps d'accouplement (1) selon la revendication 9,
**caractérisé en ce que** l'élément d'espacement (23) forme avec son côté frontal arrière, dans la direction de vissage (Y), la paroi de rainure avant (21) de la rainure périphérique (17), vu dans la direction de vissage (Y), et est supporté entre une paroi latérale arrière (39a) de la rainure de retenue (39), dans la direction de vissage (Y), et l'élément de retenue (13).

11. Corps d'accouplement (1) selon l'une quelconque des revendications 6 à 10,
**caractérisé en ce que** dans l'ouverture de passage (9), au niveau de son extrémité arrière dans la direction de vissage (Y), est fixé un élément de fermeture (26) avec une ouverture d'enfichage (29), lequel forme avec sa surface frontale avant, la paroi latérale arrière (22) de la rainure périphérique (17).

12. Corps d'accouplement (1) selon la revendication 10 ou 11,
**caractérisé en ce que** l'élément d'espacement en forme de douille (23) est réalisé de manière déformable élastiquement dans la direction radiale dans la région de l'épaulement de retenue (38) et est retenu dans la rainure de retenue (39) par encliquetage, en particulier par engagement par correspondance de formes.

13. Corps d'accouplement (1) selon l'une quelconque des revendications 1 à 12,
**caractérisé en ce qu'**un épaulement de butée (41) est réalisé au niveau de l'extrémité avant dans la direction de vissage (Y) de l'ouverture de passage (9), par une réduction de diamètre du diamètre intérieur, le diamètre intérieur de l'épaulement de butée (41) étant notamment supérieur/égal au diamètre intérieur d'une conduite tubulaire (10) à enficher.

14. Corps d'accouplement (1) selon l'une quelconque des revendications 1 à 13,
**caractérisé en ce que** l'élément de retenue (13) est dimensionné de telle sorte qu'il soit supporté de manière librement rotative à l'intérieur de l'ouverture de passage (9).

15. Corps d'accouplement (1) selon l'une quelconque des revendications 6 à 14,
**caractérisé en ce que** l'élément d'espacement (23) est disposé avec une extrémité supérieure (43) en dessous de l'élément d'étanchéité (18) afin de réaliser une étanchéité aux fluides.

16. Corps d'accouplement (1) selon l'une quelconque des revendications 6 à 15,
**caractérisé en ce que** le point d'affaiblissement de matériau (40) est réalisé dans la région de l'élément d'espacement (23).
